# EUROPEAN PATENT APPLICATION

(11) **EP 3 786 628 A1**
(43) Date of publication of application: **03.03.2021**
(21) Application number: 19194395.0
(22) Date of filing: 29.08.2019
(51) Int. Cl.: G01N 27/38, G01N 27/48, G01N 27/49

(54) **METHOD AND DEVICE FOR DETERMINING AT LEAST ONE ANALYTE SPECIES IN AN ANALYTE SOLUTION**

(71) Applicant: METROHM AG, 9100 Herisau (CH)
(72) Inventor: ESPINOSA, Miguel, 28903 Getafe, Madrid (ES); GARCIA DE LA FUENTE, Jesus, 28033, Madrid (ES)
(74) Representative: Hepp Wenger Ryffel AG

(57) **Abstract**

The invention relates to a method and a device for determining at least one analyte species in an analyte solution, preferably in n analyte solutions consecutively, a computer program comprising instructions related to the program and a computer readable medium having stored such computer program. The method involves a step of amperometric detection followed by cleaning the working electrode on-line by applying at least one cyclic electric potential to the working electrode.

## Description

The invention relates to the technical field of analysing solutions by the use of a chromatographic separation and subsequent electro-chemical detection. Such analysis is of great relevance for example for performing quality control of foodstuffs.

Electrochemical analytical cells comprising one or more measuring electrodes are currently used for analyzing analyte species in an analyte solution which has been subject to chromatographic separation. However, the presence of surface-active materials in the sample solution lead to formation of a surface residual layer on the electrode surface, resulting in electrode passivation or a change in the electrode surface state. This causes significant loss of signal or even measurement errors after such measuring electrode is used for an extended period of time, in particular, when the measuring electrode is used for subsequently for measurements in a series of sample eluates. Maintenance of a clean, reproducible electrode surface therefore is of critical importance in making meaningful electroanalytical measurements.

Conventionally, various electrode-cleaning techniques were employed for removing the surface residual layer and reactivating the electrode, among which *ex situ* mechanical polishing of the electrode surface has been proven to be the simplest method. However, deleterious scratching and cleaving of the electrode surface during polishing have significant influence on the electroanalytical measurement results and lead to measurement errors. Moreover, mechanical polishing of the electrode requires removal of such electrode from the analytical cell, resulting in prolonged system down time and reduced measurement efficiency. Also, applying electric potentials between a measuring and an auxiliary electrode have been suggested in order to clean electrolytic analytical cells. For example, Kotnik et al. discuss cathodic re-activation of a gold electrode in pulsed electrochemical detection of carbohydrates (J. Electroanalyt. Chem., (2011), doi:10.1016/j.jelechem.2011.09.026). The authors have developed a two-step potential waveform (2PAD), consisting of a detection step at a potential of +0.2V vs Ag/AgCl and short cleaning/re-activation potentials between -1.4 and -2.0 V for less than 20ms. However, such cathodic potentials applied as a square waveform leads to accelerated wear of the electrode and fails to ensure stable results in high precision measurements as are typically required following chromatographic separation of analyte solutions with varying matrices and concentrations.

It is therefore an objective of the present invention to overcome the disadvantages present in the state of the art. In particular, it is an object of the present invention to detect at least one analyte species in a solution by amperometric detection, where, after each detection phase, an *in situ* cleaning and depassivation of the electrode is realized with minimized system down time. Furthermore, it is an object of the invention to improve accuracy of the results of such measurements even if repeatedly performed over an extended period of time.

This objective is achieved by a method and a device for determining at least one analyte species in an analyte solution, preferably in n analyte solutions consecutively, a computer program and a computer readable medium having stored such computer program, having the features of the independent claims.

The method for determining at least one analyte species in an analyte solution according to the present invention comprises the steps of:
a) carrying out an chromatographic separation of the analyte solution;
b) conveying the eluate from the chromatographic separation through an electrochemical flow-through cell, having a working electrode, an auxiliary electrode and a reference electrode;
c) determining the amount of and/or the concentration of the at least one analyte species in the eluate by amperometric detection;
d) cleaning the working electrode by applying a cyclic electric potential to the working electrode.

By means of a chromatographic separation, such as HPLC or ion chromatography, an analyzable matrix of analyte in eluate is obtained. For example, sugars, alcohols or ions present in foodstuff samples can be separated and dissolved in appropriate concentration in eluate. The eluate is conveyed through an electrochemical flow-through cell, for example by means of a pump or a flow injector. It is preferred that the eluate is conveyed through an electrochemical flow-through cell in a continuous way, for example by flow injection.

The determination of analyte species by amperometric detection comprises the steps of: measuring the electrolysis current while conveying the eluate as a function of time; and determining the amount and/or concentration of the at least one analyte species in the analyte solution by comparison of the electrolysis current with a calibration function previously generated for the at least one analyte species to be determined.

The subsequent cleaning is performed by applying a cyclic electric potential to the working electrode. The term "cyclic electric potential" (also called cyclic voltammetry, CV) refers herein to a type of potentiodynamic electrochemical treatment. In a cyclic voltammetry experiment, the working electrode potential is ramped linearly versus time. When cyclic voltammetry reaches a set potential, the working electrode's potential ramp is inverted. Inversions can be done multiple times during a single experiment. The current at the working electrode can be plotted versus the applied voltage to give the cyclic voltammogram trace. The combination of solvent, electrolyte and specific working electrode material determines the range of the potential. Electrodes typically are static and sit in unstirred solutions during cyclic voltammetry.

The cyclic electric potential is applied on-line, while the electrochemical flow-through cell is being rinsed, e.g. with eluent. Hence, removal of the electrode from the device for mechanical polishing or potentiostatic cleaning becomes unnecessary. Long waiting periods between subsequent measurements can be avoided and through-put efficiency can be improved.

Cleaning by gradually increased/decreased potential in a cyclic form is gentler compared to the application of other cleaning procedures, e.g. the pulsed application of square wave potentials. By using cyclic potential(s), a certain amount of hydrogen may be generated and pass through the electrical double layer of the electrode, hence forming metal oxides, e.g. gold oxides. However, due to the subsequent reduction of the metal oxides, the metal might re-coat the electrode surface in a homogeneous and thus preferable way. As a result, continuous performance, efficiency and longevity of the gold electrode are improved.

It is another positive effect of the use of a CV-technique for cleaning purposes that the state of the electrode surface can be verified after each sequence of steps and monitored over time, if needed.

It is preferred that the method is suitable for determining at least one analyte species in a series of a analyte solutions, comprising a first analyte solution and up to n analyte solutions in total, wherein the steps a) to d) are performed for each of the analyte solutions in the series, adding up to a total of n performances. By "n" we mean any natural number ≥2.

It goes without saying that the advantages of the presented method are most pronounced when a high number of samples is to be processed. In this case, the saving of time becomes more important. As has been described above, no removal of the working electrode for cleaning purposes is required. It is preferred that also no re-calibration between measuring steps is performed. Such re-calibration becomes redundant due to the continuously maintained (cleaned and reactivated) electrode surface. Again, processing time is shortened and through-put efficiency can be improved, while accuracy of measuring results is not impaired. It is advantageous if the method as described above is automated.

It is further preferred that the amperometric detection is performed in direct current (DC) or pulsed amperometric (PAD) mode.

Pulsed amperometric detection (PAD) is particularly suitable for the analysis of large molecules such as carbohydrates (sugars, alcohols). When such molecules are decomposed on the electrode surface, this leads to heavy depositions, which are preferably removed by pulsed voltage. Direct current (DC) measurements or constant potential amperometry, on the other hand, is suitable for detecting unstable compounds such as small ions. Both measurement modes are within the scope of this application. However, it is more preferred that the the suggested determination sequence includes DC-mode measurements. When analyzing the amount/concentration of small ions in DC mode, it is particularly relevant that the measuring potential (DC mode) and the potential window in each cleaning cycle (cyclic electric potential) are exactly the same for every repetition of the determination sequence. Therefore, it is not sufficient that the working electrode be rigorously cleaned. Its metal surface should retain a high degree of homogeneity.

In an advantageous embodiment of the invention, at least one analyte species is an ion, in particular an ion selected from the group of sulfite (SO₃²⁻) , cyanide (CN⁻), sulfide (S²⁻) und iodide (I⁻). As has been outlined above, the gentle cleaning of the electrode surface, optionally in combination with (DC) measurement is particularly suitable for small ion analysis. The listed sulfite (SO₃²⁻), cyanide (CN⁻), sulfide (S²⁻) und iodide (I⁻) are often subject to regulatory provisions and quality endeavours, e.g. relating to foodstuffs. Highly automated procedures for high-throughput analysis with excellent reproducibility are therefore required. These requirements can be met by means of the present method, device and software.

In order to further improve analysis results, it may be advantageous that the sample is processed and/or purified prior to chromatographic separation. Suitable techniques include ultrafiltration or dialysis. An aspect of the invention therefore relates to a method as described above wherein prior to step a), there is performed a preparative step of processing and/or purifying the analyte solution, preferably by means of ultrafiltration and/or dialysis.

The working electrode may be a gold electrode, which is an excellent electro catalyst for oxidation of a wide range of molecules. The reference electrode may be an Ag/AgCl-electrode. Reference electrodes, such as Pd-electrodes, have been tested as an alternative. Their performance in experiments as described herein has shown to be not entirely stable. When using Pd-based reference electrodes, the reactivation of the working electrode requires more reactivation cycles under thorough rinsing, and poor reproducibility of results (cyclo-voltammograms) might be noted.

In the method as described above, the constant potential in DC-mode may be in the range from 0.1 to 0.6V, preferably from 0.2 to 0.4V. DC measurement, i.e. applying a constant potential, within this range has proven very suitable for ions, e.g. those indicated above, standard eluent (typically 100-500 mM NaOH / 100-500 mM sodium acetate) and the relevant set of electrodes.

In the method as described above, the minimum potential applied to the working electrode in the electrical potential cycle is preferably be not lower than -1.1 V and no higher than 1.1 V, more preferably the cyclic electric potential ranges from -0.8 V to 0.8 V, even more preferably the minimum potential is -0.6 V and the maximum potential is 0.7 V. Moderate cleaning potentials ensure slow degradation and longevity of the electrode.

It is advantageous when the sweep rate in the applied cyclic electric potential is no higher than ±1 V/s, preferably no higher than ±0.5 V/s, more preferably no higher than ±0.2 V/s. A rather slow sweep rate prevents degradation of the electrode and supports the gentle re-activation and homogenization of the surface. For the same reason, it is preferred that the cathodic and anodic sweep rate have an identical absolute value. If the sweep rate is kept constant, the applied voltage can be described by a triangular function having a plane of symmetry.

It is preferred that the eluent for the chromatographic separation is degassed, in particular, prior to being pumped onto the chromatographic column. This is beneficial for reducing the formation of metal oxides, in particular gold oxides. Such formation of oxides is due to the presence of oxygen in the eluent and will accelerate electrode degradation.

The invention further relates to a device for determining at least one analyte species in a first analyte solution, preferably in n analyte solutions, comprising an ion chromatographic separation unit, an electrochemical flow-through cell, and means adapted to execute the steps of the method as described above.

Optionally, the device may contain a processing or purification unit to process or purify the analyte solution. Such processing or purification unit may be arranged upstream of the chromatographic separation unit. For instance, the processing or purification unit may be a microfiltration device or a dialysis cell.

In particular, the chromatographic separation unit may be designed for ion chromatography and the electrochemical flow-through cell comprises the preferable sets of electrodes as described above. The eluent may be degassed by means of an eluent degasser positioned upstream of the chromatographic separation unit.

With respect to the means adapted to execute the steps of method, such means may comprise a computer program comprising instructions to cause the device to execute the steps of the method. An aspect of the invention therefore refers to a computer program comprising instructions to cause the said device to execute the steps of the said method.

The computer program may be stored on a computer-readable medium. The invention also relates to such a medium.

The invention will be understood better by means of the following example and figures. The invention shall not be limited to the specific embodiments as described by these examples and figures.

The Figures show the following:
- Fig 1:: Schematic view of a device for determining at least one analyte species in n analyte solutions according to the invention;
- Fig 2:: Schematic view of the electrode arrangement in an electrochemical flow-through cell according to the invention;
- Fig 3:: Exemplary chromatogram obtainable by means of a method or a device according to the invention.

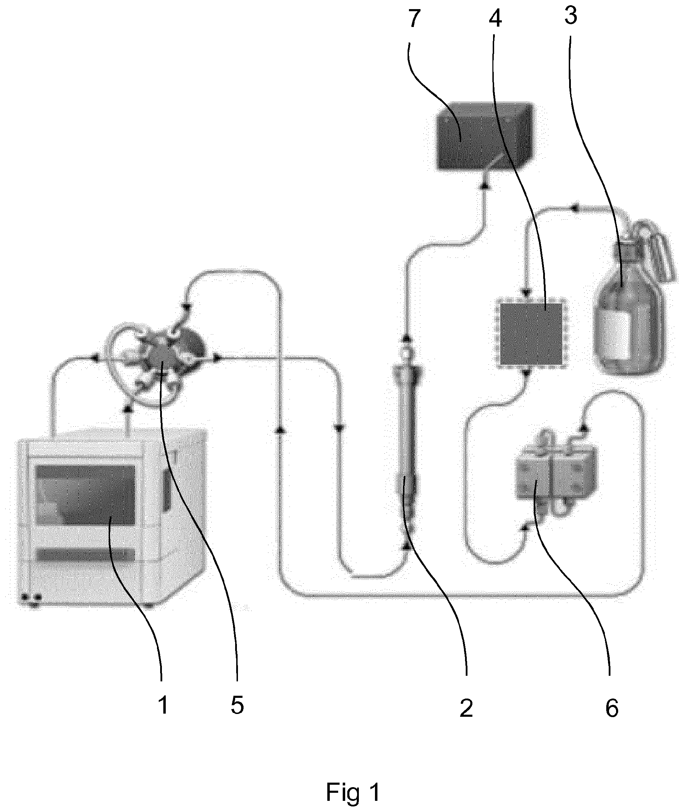

Figure 1 presents a schematic view of a device for determining at least one analyte species in n analyte solutions according to the invention. A plurality of samples containing sulfite (SO₃²⁻) were stabilized in a solvent of 1 mM formaldehyde / 0.02 mM NaOH, kept at a temperature of 6°C, and provided by sample changer 1. The device further has an ion chromatographic column 2. In the present example, column "Metrosep Carb 2 - 150/4.0" commercially available from Metrohm was used. The eluent used for the chromatographic separation is provided in container 3. In the present example, 300mM NaOH / 300 mM sodium acetate was used. The eluent was degassed in degasser 4. Eluent was conveyed to the injection valve 5 by means of high pressure pump 6. In rinsing mode, eluent and/or any reference solution can be transferred directly to the chromatographic column 2 and on to detector 7. Detector 7 comprises an electrochemical flow-through cell for amperometric detection of the ions of interest.

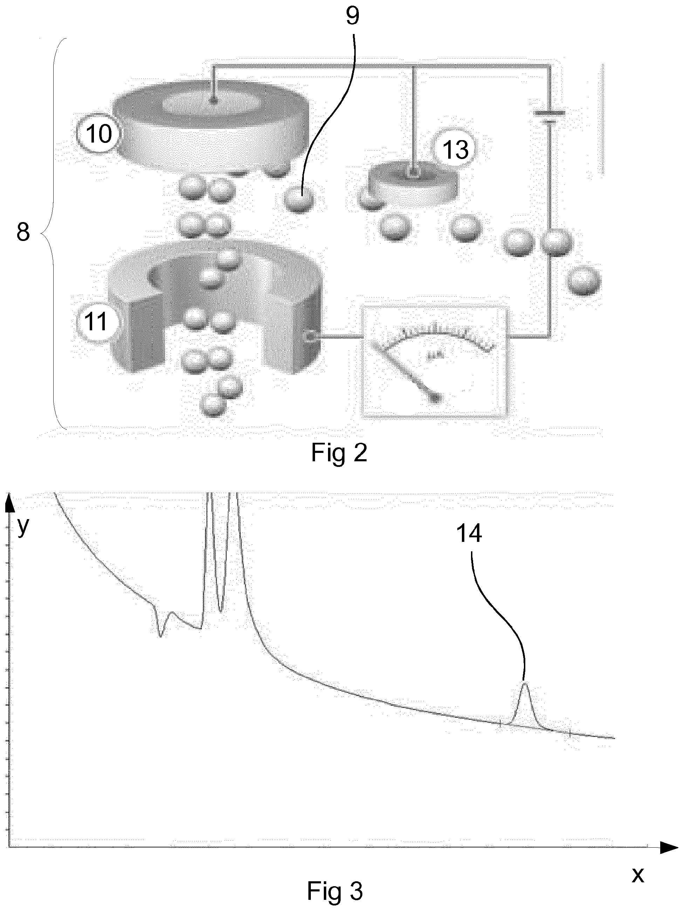

Figure 2 represents a schematic view of the electrode arrangement in an electrochemical flow-through cell 8 according to the invention. The electrochemical flow-through cell 8 has a working electrode 10 of gold, a counter electrode 11 of stainless steel and a reference electrode 13 of Ag/AgCl (wall-jet electrodes). When carrying out the chromatographic separation of the sample solution, the sample solutions were injected onto the separation column (3 µL injection volume), chromatography was performed (0.5 mL/min), and the separated analyte species 9 were injected continuously into the electrochemical cell. The set potential for the electrochemical cell was 0.3 V, in direct current measuring mode. Chromatography and amperometric detection were both performed at temperatures of 35°C. The electrolysis current was measured and plotted as a function of time to give a chromatogram.

Figure 3 represents chromatogram obtainable by means of the exemplary method and device. The x-axis shows time (in min) and the y-axis a current (in µA). The peaks in current were compared to a calibration function previously generated and peak 14 was identified as pertaining to sulfite.

The device shown in Figure 1 is configured to perform a series of sequences as described above in a fully automated way. The device comprises means (not shown) adapted to execute the steps of the method according to the invention n times. In particular, the means include a computer running a computer program with instructions to cause the device to apply different chromatographic stages and amperometric modes. By means of such computer program, the cleaning steps following the measuring steps can be steered, such that the working electrode is cleaned on-line, i.e. immediately following detection, by applying a cyclic electric potential. In the present example, each cyclic electric potential started from a minimum value of -0.6 V and increased with a sweep rate of 0.1 V/s up to a maximum voltage of 0.7 V, where the ramp was inversed. The potential was decreased with a sweep rate of -0.1 V/s.

The described electric potential cycle was repeated five times after each determination sequence. After the last cleaning cycle, the next determination sequence automatically started for a second analyte solution. No polishing of the electrodes or re-calibration in-between sequences is required.

## Claims

1. Method for determining at least one analyte species in an analyte solution, comprising the steps of:
a) carrying out a chromatographic separation of the analyte solution;
b) conveying the eluate from the chromatographic separation through an electrochemical flow-through cell (8), having a working electrode (10), a counter electrode (11) and a reference electrode (13);
c) determining the amount of and/or the concentration of the at least one analyte species in the eluate by amperometric detection;
d) cleaning the working electrode (10) on-line by applying at least one cyclic electric potential to the working electrode.

2. Method according to claim 1, wherein the method is for determining at least one analyte species in a series of a analyte solutions, comprising the first analyte solution and up to n analyte solutions in total, wherein the steps a) to d) are performed for each of the analyte solutions in the series, adding up to a total of n performances.

3. Method according to any one of the preceding claims, wherein the method is automated.

4. Method according to any one of the preceding claims, wherein the amperometric detection is performed in direct current (DC) or pulsed (PAD) mode, preferably in direct current mode (DC).

5. Method according to any one of the preceding claims, wherein the at least one analyte species is an ion, in particular an ion selected from the group of sulfite (SO₃²⁻), cyanide (CN⁻), sulfide (S²⁻) und iodide (I⁻) .

6. Method according to any one of the preceding claims, wherein the working electrode (10) is a gold electrode.

7. Method according to any one of the preceding claims, wherein the reference electrode (13) is an Ag/AgCl electrode.

8. Method according to any one of claims 4 to 7, wherein the constant potential in DC-mode is from 0.1 to 0.6V, preferably from 0.2 to 0.4V.

9. Method according to any one of the preceding claims, wherein the minimum potential applied to the working electrode in the electrical potential cycle is not lower than -1.1 V and not higher than 1.1 V, preferably the cyclic electric potential ranges from -0.8V to 0.8 V, more preferably the minimum potential is -0.6 V and the maximum potential is 0.7 V.

10. Method according to any one of the preceding claims, wherein the sweep rate in the cyclic electric potential is not higher than ±1 V/s, preferably not higher than ±0.5 V/s, more preferably not higher than ±0.2 V/s.

11. Method according to any one of the preceding claims, wherein the eluent is degassed.

12. A device for determining at least one analyte species in a first analyte solution, preferably in n analyte solutions, comprising an ion chromatographic separation unit (2), an electrochemical flow-through cell (8), and means adapted to execute the steps of method claim 1 to 11.

13. A computer program comprising instructions to cause the device of claim 12 to execute the steps of any one of the method claims 1 to 11.

14. A computer-readable medium having stored thereon the computer program of claim 13.
